# FASCICULE DE BREVET EUROPEEN

(11) **EP 0 618 705 B1**
(45) Date de publication et mention de la délivrance du brevet: **03.05.2000**
(21) Numéro de dépôt: 94400660.0
(22) Date de dépôt: 28.03.1994
(51) Int. Cl.: H04L 12/56, H04L 12/18

(54) **Noeud de commutation asynchrone distribuant dynamiquement des cellules vers des sorties constituant un groupe dit irrégulier**
Asynchrone Vermittlungsstelle zur dynamischen Verteilung der Zellen an eine nicht-reguläre Gruppe der Ausgänge
Asynchronous switching node distributing dynamically cells to outputs forming an irregular group

(30) Priorité: 31.03.1993 FR 9303763
(43) Date de publication de la demande: 05.10.1994
(73) Titulaire: ALCATEL, 75382 Paris Cédex 08 (FR)
(72) Inventeur: Henrion, Michel, B-1180 Bruxelles (BE)
(74) Mandataire: Sciaux, Edmond

(56) Documents cités:
- EP-A- 0 446 540
- EP-A- 0 524 350
- INT. SWITCHING SYMPOSIUM 92, vol.2, 25 Octobre 1992, JAPAN pages 156 - 160, XP337713 SCHRODI ET AL

## Description

L'invention concerne un noeud de commutation asynchrone distribuant régulièrement des cellules vers des sorties constituant un groupe dit irrégulier. Un tel noeud de commutation est utilisable dans un système de télécommunication asynchrone comportant au moins deux noeuds de commutation reliés par un groupe d'au moins deux liaisons de transmission. Chaque noeud de commutation comporte un réseau de commutation asynchrone ayant des entrées et des sorties, et constitué de plusieurs éléments de commutation disposés en plusieurs étages entre les entrées et les sorties.

Il est souhaitable de transférer des cellules d'un noeud à l'autre en les distribuant régulièrement sur les différentes liaisons de transmission constituant un groupe, la sélection d'une liaison étant réalisée cellule par cellule de telle façon que toutes les liaisons reçoivent statistiquement un nombre de cellules aussi égal que possible, à court terme, dans l'hypothèse où ces liaisons ont le même débit maximal.

Ce procédé connu a des avantages : amélioration de l'efficacité des liaisons entre les noeuds et amélioration de la fiabilité des communications sur les liaisons disponibles dans le groupe . Mais il soulève un problème : Pour chaque cellule, le noeud doit être capable d'identifier un groupe de sorties de ce noeud qui sont reliées au groupe de liaisons de transmission auquel est destinée cette cellule; puis doit sélectionner dynamiquement l'une des sorties ainsi identifiées tout en assurant une distribution de groupe statistiquement équilibrée sur les ports de sortie de chaque groupe, et y transférer cette cellule.

Il est nécessaire de distinguer deux cas :
- soit chaque groupe de sorties est régulier, c'est-à-dire est constitué de sorties dont les adresses sont liées par une relation mathématique;
- soit certains groupes sont irréguliers, c'est-à-dire sont constitués de sorties dont les adresses ne peuvent pas
être liées par une relation mathématique.

Par exemple, les adresses des sorties constituant un groupe régulier sont de la forme : ABXDEFXXIJXX, où A, B, D, E, F, I, J sont des valeurs binaires fixées définissant l'adresse du groupe, et où X est un symbole qui représente une valeur binaire indifférente. Cette adresse identifie un groupe régulier de 32 sorties ayant respectivement les adresses suivantes :
AB0DEF00IJ00
AB0DEF00IJ01
AB0DEF00IJ10
AB0DEF00IJ11
AB0DEF01IJ00
AB0DEF01IJ01
AB0DEF01IJ10
AB0DEF01IJ11
AB0DEF10IJ00
AB0DEF10IJ01
AB0DEF10IJ10
AB0DEF10IJ11
............
AB1DEF11IJ11

Dans l'exemple ci-dessus, les quatre possibilités de valeur des deux derniers bits XX correspondent à des sous-groupes constitués de quatre sorties consécutives, alors que les trois autres bits X répliquent huit fois ces sous-groupes de quatre sorties, selon une distribution régulière dans l'ensemble des adresses de sortie.

La demande de brevet européen n° 91-201915.5 déposée le 22 juillet 1991, décrit un noeud capable de distribuer dynamiquement des cellules vers des sorties, constituant un groupe régulier. Le noeud est constitué essentiellement d'un réseau de commutation qui comporte plusieurs étages constitués chacun d'au moins un élément de commutation. Les sorties du réseau de commutation sont regroupées en plusieurs groupes réguliers, chaque groupe comprenant au moins une sortie.

Le réseau de commutation utilisé est du type à auto-acheminement multitrajet : le trajet suivi par une cellule ayant pour destination une sortie donnée n'est pas entièrement décidé dès son entrée dans le réseau, mais pas à pas dans chaque étage, avec plusieurs possibilités de trajet, pour la traversée des étages autres que le premier et le dernier.

Des données d'auto-acheminement internes au noeud sont associées à chaque cellule par des moyens de traduction placés à l'entrée du noeud. Les moyens de traduction déduisent ces données d'acheminement internes des données d'acheminement externes : identité de circuit virtuel et identité de faisceau virtuel. Dans le cas où une cellule est destinée à un groupe de sorties, les données d'acheminement internes désignent l'ensemble du groupe destinataire de la cellule. Elles n'identifient donc pas la sortie particulière qui sera finalement sélectionnée dynamiquement par le noeud de commutation pour transférer la cellule considérée au groupe destinataire.

Le réseau de commutation utilisé est capable de réaliser un acheminement de groupe. Chaque élément de commutation identifie un groupe de sorties parmi ses propres sorties, en fonction des données d'auto-acheminement interne associées à la cellule. Les sorties ainsi identifiées sont celles qui permettent d'accèder à la sortie (ou au groupe de sorties) du réseau, et donc à la sortie (ou au groupe de sorties) du noeud, qui constitue la destination de cette cellule. Un groupe de sorties, d'un élément de commutation, qui permettent d'accèder à une sortie (ou à un groupe de sortie) du noeud est appelé groupe d'acheminement.

Puis l'élément de commutation sélectionne aléatoirement une sortie quelconque parmi les sorties du groupe d'acheminement ainsi identifié, et transfère la cellule à la sortie sélectionnée.

Le procédé d'identification du groupe d'acheminement dans un élément de commutation est le suivant. Une cellule qui doit être transférée à une destination donnée possède, dans ses données d'auto-d'acheminement interne, une adresse dite de destination. Par exemple, considérons une cellule à transférer d'une entrée du noeud vers une sortie quelconque appartenant à un groupe de huits sorties du noeud, dont les adresses sont données par la relation mathématique 1792+k*32, où k = 1, 2, 3...., 8, et où "*" est le signe de multiplication. L'adresse de groupe d'auto-acheminement d'une cellule comprend trois champs de bits : 11, XXX, 11111. Ces trois champs de bits peuvent par exemple correspondre aux données d'acheminement successivement utilisées par les éléments de commutation d'un réseau de commutation à 3 étages.

Un élément de commutation du premier étage reçoit la cellule et analyse le premier champ de l'étiquette : la valeur "11" du premier champ identifie une sortie (ou un groupe d'acheminement), unique parmi quatre sorties (ou groupes d'acheminement) de cet élément de commutation du premier étage. La cellule est transférée à cette sortie ou à l'une des sorties du groupe d'acheminement.

Le deuxième élément de commutation analyse le deuxième champ : la valeur "XXX" du deuxième champ identifie simultanément toutes les huit sorties de cet élément de commutation. L'élément de commutation sélectionne l'une quelconque de ces sorties aléatoirement, selon une répartition statistique aussi régulière que posible, à court terme, car le réseau a une structure régulière dans cet exemple. La cellule est transférée à la sortie sélectionnée.

Le dernier élément de commutation analyse le troisième champ : la valeur "11111" identifie une sortie unique parmi trente deux sorties de l'élément de commutation. Cette sortie est reliée à une sortie du réseau. L'ensemble des sorties d'un élément de commutation du deuxième étage est réparti uniformément vers les différents éléments de commutation appartenant au troisième étage. Par conséquent, la distribution réalisée par les éléments du deuxième étage répartit les cellules successives, ayant la même adresse 11 XXX 11111 de destination de groupe, vers huit sorties du réseau de commutation ayant des adresses liées par la relation 1792 + k * 32. Si la distribution est aléatoire à court terme, il y a bien une distribution régulière des cellules vers les huits sorties du noeud appartenant au groupe régulier de destination.

Pour réaliser un tel réseau de commutation il est possible d'utiliser des éléments de commutation tels que celui décrit sans la demande de brevet français n° 2.659.819. Cet élément de commutation est capable d'acheminer des cellules sur des groupes de sorties (groupes d'acheminement), en équilibrant statistiquement la charge entre les sorties d'un groupe de cet élément de commutation. La sélection est faite soit au moyen d'un générateur de signal pseudo-aléatoire, soit en fonction des contenus respectifs des files d'attente des sorties de l'élément de commutation considéré.

Cet élément de commutation connu permet donc de distribuer régulièrement des cellules sur un groupe régulier de sorties du noeud. Il a cependant pour inconvénient de ne permettre une distribution de cellules que dans le cas où les groupes de sorties sont réguliers. Des groupes irréguliers ne permettent pas d'utiliser des valeurs de bit indifférentes, pour identifier des sorties d'un élément de commutation.

Le but de l'invention est donc de proposer un noeud de commutation permettant de réaliser une distribution des cellules, cellule par cellule, sur les différentes liaisons d'un groupe de liaisons externes, même dans le cas où ce groupe est irrégulier. La solution pour atteindre ce but, doit en outre rester compatible avec les différents procédés classiques d'acheminement d'une cellule vers une liaison simple. Un autre but de l'invention est de permettre aussi une distribution des cellules dans le cas d'un transfert de point à multipoints, chacune des destinations étant une liaison individuelle ou un groupe de liaisons.

Une solution triviale consisterait à utiliser successivement deux fois le réseau de commutation d'un noeud, pour chaque cellule :
- une première fois pour transférer cette cellule à partir de premières entrées vers des premières sorties du noeud; un groupe de liaisons régulier reliant les premières sorties du noeud à un dispositif répartiteur, répartissant les cellules aléatoirerement sur ces liaisons, puis les restituant à des secondes entrées de ce même noeud;
- une seconde fois pour transférer la cellule des secondes entrées vers des secondes sorties du noeud, afin d'émettre la cellule sur une liaison du groupe de liaisons irrégulier, qui constitue la destination de cette cellule.

Une telle solution nécessite donc de doubler la capacité du réseau de commutation et par conséquent n'est pas utilisable pratiquement, sauf pour un tout petit réseau.

L'objet de l'invention est un noeud de commutation asynchrone distribuant dynamiquement des cellules vers des sorties constituant un groupe dit irrégulier, les adresses des sorties d'un groupe irrégulier n'étant pas liées par une relation mathématique; comportant :
- un étage d'entrée recevant des cellules sur une pluralité d'entrées et recevant pour chaque cellule une information d'acheminement externe, ce premier étage associant à chaque cellule une étiquette d'acheminement interne qui est fonction de l'information d'acheminement externe;
- et plusieurs étages de commutation, chaque étage comportant au moins un élément de commutation; chaque élément de commutation comportant des moyens pour transférer une cellule reçue sur l'une de ses entrées vers au moins une de ses sorties, en fonction de l'étiquette d'acheminement interne associée à cette cellule;
   caractérisé en ce que l'étage d'entrée comporte des moyens pour sélectionner, pour chaque cellule destinée à un groupe irrégulier de sorties, une étiquette d'acheminement interne parmi des étiquettes d'acheminement internes prédéterminées identifiant respectivement des sous-groupes de sorties dit réguliers, dont la réunion constitue ce groupe irrégulier, chaque sous-groupe régulier comportant une sortie unique ou une pluralité de sorties dont les adresses sont liées par une relation mathématique;
   et en ce que les moyens pour sélectionner une étiquette la sélectionnent selon un algorithme qui est fonction du rang de l'entrée recevant ladite cellule.

Le noeud ainsi caractérisé permet de réaliser une distribution vers un groupe de sorties quelconque, puisque tout groupe de sorties peut être décomposé en plusieurs sous-groupes de sorties réguliers. Dans un cas extrême, un sous-groupe régulier ne comporte qu'une seule sortie. Le problème de distribution est alors résolu en combinant un étage de type nouveau, avec des étages de commutation de types connus permettant d'acheminer une cellule vers une sortie donnée ou vers un groupe de sorties régulier donné. Le noeud selon l'invention peut donc être réalisé au moyen d'éléments de commutation déjà connus. Seul le premier étage du noeud, pour traduire des données d'acheminement externe en une étiquette d'acheminement interne, est modifié : l'étiquette est sélectionnée parmi un ensemble d'étiquettes qui sont prédéterminées de façon à décomposer le groupe irrégulier en sous-groupes réguliers, compatibles avec les capacités d'acheminement des étages de commutation qui sont utilisés.

Le noeud ainsi caractérisé permet de décorréler des cellules ayant la même destination mais qui arrivent sur différentes entrées du premier étage, puisque l'étiquette sélectionnée est différente selon l'entrée.

Ce procédé est compatible avec les procédés classiques d'acheminement, à trajet unique ou multitrajet, car seule est modifiée l'étape consistant à convertir des données d'acheminement externe en une étiquette d'acheminement interne, en amont des étages de commutation.

Selon une autre caractéristique, afin d'effectuer une sélection dynamique et variable du sous-groupe régulier ou de la sortie dans le groupe, l'algorithme selon lequel une étiquette d'acheminement interne est déterminée, est en outre fonction du temps. Le noeud ainsi caractérisé décorrèle temporellement les cellules qu'il reçoit. Si une même entrée reçoit beaucoup plus de cellules que les autres, le noeud distribue ces cellules vers les différentes sorties du groupe constituant la destination commune de ces cellules, sans privilégier l'une de ces sorties, grâce à la décorrélation temporelle. Par conséquent ce noeud évite de surcharger une sortie du groupe par rapport aux autres, comme cela pourrait être le cas si l'algorithme était fonction uniquement du rang de l'entrée recevant les cellules.

Selon un mode de réalisation préférentiel, l'algorithme de sélection de sortie est fonction d'une variable constituée de la somme de la valeur du rang de l'entrée et d'un temps incrémenté par unités de temps égales à la durée d'une cellule. La valeur ainsi constituée est différente pour chacune des entrées, à un instant donné; et elle est différente pour des cellules successives arrivant sur une même entrée. Cette variable permet donc bien une décorrélation temporelle et une décorrélation spatiale simultanément.

Selon une autre caractéristique l'algorithme de sélection est fonction en outre de la bande passante des sous-groupes réguliers constituant le groupe considéré.

Le noeud ainsi caractérisé évite de surcharger les sous-groupes ayant une bande passante plus faible que d'autres, car il permet de sélectionner plus fréquemment les sous-groupes ayant une plus grande bande passante.

Différents modes de réalisation du noeud selon l'invention sont possibles, selon les possibilités d'acheminement des éléments de commutation. La décomposition des groupes de sorties en sous-groupes réguliers est faite en fonction de ces possibilités.

Selon un premier mode de réalisation, le noeud selon l'invention comporte des étages de commutation mettant en oeuvre un acheminement monotrajet; et est caractérisé en ce que chacune des étiquettes d'acheminement internes prédéterminées identifie un sous-groupe régulier ne comportant qu'une seule sortie.

Le noeud ainsi caractérisé est particulièrement adapté au cas où les éléments de commutation ont des possibilités d'acheminement strictement limitées à l'acheminement monotrajet.

Selon un deuxième mode de réalisation, un noeud selon l'invention comporte au moins un élément de commutation mettant en oeuvre un acheminement monotrajet, et comporte en outre, en aval, un étage supplémentaire ayant la capacité de distribuer de manière aléatoire des cellules dans un groupe de sorties régulier, appelé grappe, chaque grappe étant constituée de sorties dont les adresses ont des valeurs consécutives; et est caractérisé en ce qu'au moins une des étiquettes d'acheminement prédéterminées identifie un sous-groupe régulier constitué de plusieurs sorties ayant des adresses consécutives.

Le noeud ainsi caractérisé présente l'avantage d'être particulièrement adapté à un cas qui est très fréquent en pratique, car souvent les groupes de sorties irréguliers sont constitués de grappes de sorties dont les adresses ont des valeurs consécutives à l'intérieur de chaque grappe. Cela tient au fait que lors d'une augmentation des capacités des liaisons entre deux noeuds, les liaisons ne sont pas rajoutées une par une mais sont généralement rajoutées par grappe, chaque grappe étant raccordée à un groupe de sorties dont les adresses ont des valeurs consécutives.

D'autre part, ce mode de réalisation a l'avantage de permettre l'utilisation d'éléments de commutation ayant des capacités d'acheminement limitées à l'acheminement monotrajet, les capacités du dernier étage seulement étant augmentées de la capacité de distribution sur une grappe de sorties.

Selon un troisième mode de réalisation, le noeud selon l'invention comporte au moins un élément de commutation mettant en oeuvre un acheminement multitrajet, c'est-à-dire comportant :
- des moyens pour identifier un groupe de sorties (groupe d'acheminement) parmi les sorties de cet élément, permettant d'accéder par différents trajets à l'une des sorties d'un sous-groupe régulier identifié par l'étiquette d'acheminement interne;
- des moyens pour sélectionner une sortie quelconque quelconque parmi le groupe de sorties identifié;
   et est caractérisé en ce qu'au moins une des étiquettes d'acheminement interne prédéterminées identifie un sous-groupe régulier comportant plusieurs sorties.

Le réseau ainsi caractérisé est particulièrement bien adapté dans le cas où les sous-groupes de sortie sont constitués de sorties dont les adresses ne sont pas consécutives mais sont liées par une relation mathématique. En pratique ce cas est assez fréquent, parce qu'il se rencontre chaque fois qu'un groupe a été dupliqué un certain nombre de fois, pour doubler à chaque fois sa capacité, et alors que les adresses d'origine n'étaient pas forcément consécutives.

Selon un quatrième mode de réalisation, pour diffuser plusieurs exemplaires d'une cellule respectivement vers plusieurs destinations pouvant être chacune un groupe irrégulier, un noeud selon l'invention comporte au moins un élément de commutation capable de diffuser plusieurs exemplaires d'une cellule respectivement vers plusieurs destinations qui sont des groupes réguliers de sorties selon un arbre de diffusion prédéterminé, cet élément comportant :
- des moyens pour identifier au moins une sortie parmi chaque groupe de sorties de cet élément, identifiée en fonction d'un numéro d'arbre de diffusion situé dans l'étiquette d'acheminement interne de cette cellule;
- des moyens pour émettre un exemplaire de cette cellule sur chacune des sorties ainsi sélectionnées;
   et est caractérisé en ce qu'au moins une des étiquettes d'acheminement interne prédéterminées identifie un arbre de diffusion permettant d'acheminer un exemplaire d'une cellule vers un sous-groupe régulier de chacun des groupes irréguliers constituant les destinations de cette cellule.

Le mode de réalisation ainsi caractérisée permet de diffuser une cellule vers des sorties isolées, ou des groupes réguliers, ou des groupes irréguliers, au moyen d'éléments de commutation de types connus, ayant la capacité de diffusion. Seul est modifié le premier étage du noeud, pour sélectionner un sous-arbre parmi une pluralité de sous-arbres prédéterminés, chaque sous-arbre étant prédéterminé de façon à acheminer, pour chaque destination un exemplaire d'une cellule vers l'un des sous-groupes réguliers constituant le groupe irrégulier qui est cette destination.

L'invention sera mieux comprise et d'autres caractéristiques apparaîtront à l'aide de la description ci-dessous et des figures l'accompagnant :
- la figure 1 représente le schéma synoptique d'un exemple de réalisation d'un noeud de commutation, selon l'invention;
- la figure 2 représente le schéma synoptique d'un premier exemple de réalisation des étages de commutation de cet exemple de réalisation, et illustre leur fonctionnement dans le cas où ces étages de commutation ont seulement la possibilité d'acheminement monotrajet;
- la figure 3 représente le schéma synoptique d'un deuxième exemple de réalisation de ces étages de commutation, et illustre leur fonctionnement dans le cas de la distribution d'une cellule vers un groupe irrégulier de sorties, constitué de plusieurs grappes de sorties ayant des adresses consécutives;
- la figure 4 représente le schéma synoptique d'un troisième exemple de réalisation de ces étages de commutation ayant la possibilité d'acheminement multitrajet, et illustre leur fonctionnement dans le cas de la distribution d'une cellule vers un groupe irrégulier constitué de plusieurs sous-groupes réguliers de sorties ayant des adresses non consécutives mais reliées par une relation mathématique;
- les figures 5 et 6 représentent le schéma synoptique d'un quatrième exemple de réalisation de ces étages de commutation et illustrent leur fonctionnement dans le cas de la diffusion d'une cellule vers trois destinations qui sont trois groupes irréguliers de sortie;
- les figures 7 et 8 représentent respectivement les schémas synoptiques de deux circuits de traduction pour sélectionner une étiquette d'acheminement interne à partir d'identités de circuit virtuel et de faisceau virtuel.

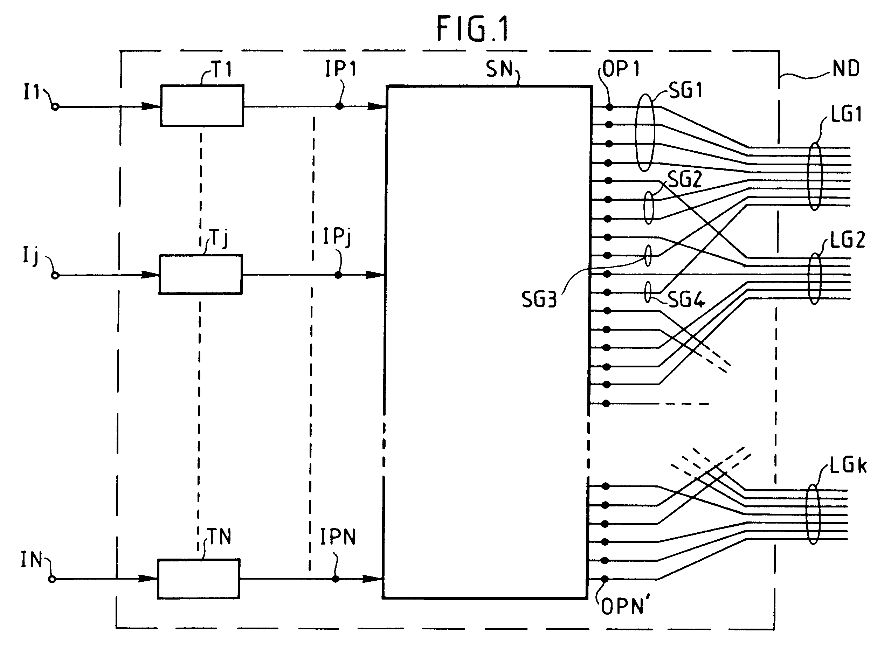

Le noeud ND représenté sur la figure 1 raccorde N entrées I1, ..., Ij, ..., IN à N' sorties reliées à des liaisons regroupées en groupes quelconques : LG1, ........, LGk. Chaque groupe peut être décomposé en un certain nombre de sous-groupes réguliers, un sous-groupe régulier pouvant éventuellement être constitué d'une seule sortie. Considérons tout d'abord le cas où une cellule est destinée à un seul groupe de sorties : LG1 par exemple. Cette cellule est acheminée dans le noeud ND en fonction d'informations d'acheminement interne contenues dans une étiquette d'acheminement interne qui est associée à la cellule lorsqu'elle entre dans le noeud. Ces informations d'acheminement interne sont déduites d'informations d'acheminement externe qui peuvent être implicites (rang de la cellule dans un multiplexage temporel) ou explicites (identificateur de circuit virtuel ou de faisceau virtuel).

Les données d'acheminement externes désignant une communication doivent être converties en une étiquette d'acheminement interne au moyen d'une traduction, puisque le fait que le groupe soit irrégulier empêche de déterminer entièrement cette adresse de sortie par un calcul. Cette traduction peut être faite : soit en une seule étape, dans un premier étage du noeud, avant l'entrée dans un premier étage d'éléments de commutation; soit en plusieurs étapes, dans les différents étages d'éléments de commutation; soit en combinant ces deux procédés. Selon la présente invention, la traduction est faite avant l'entrée dans le premier étage d'éléments de commutation : un noeud de commutation selon l'invention comporte un premier étage qui sélectionne, des étiquettes prédéterminées, une étiquette identifiant un sous-groupe régulier de sorties du noeud, comprenant éventuellement une seule sortie, selon un algorithme qui est fonction du rang de l'entrée recevant la cellule considérée, et préférentiellement qui est fonction en outre de l'instant où cette cellule est reçue.

L'exemple de réalisation d'un noeud ND, qui est représenté sur la figure 1, comporte :
- un réseau des connexions SN, ayant N' sorties OP1, ..., OPN' qui constituent les sorties du noeud ND, et ayant N entrées IP1,..., IPj, ..., IPN;
- N circuits de traduction T1,..., TN, ayant chacun une entrée et une sortie, et qui sont intercalés respectivement entre les entrées I1,...,IN du noeud ND et les entrées IP1,...,IPN du réseau de connexion SN.

Dans ce qui suit, on utilisera indifféremment la notion de groupe de sorties du réseau de commutation SN, et la notion de groupe de liaisons de sortie du noeud ND. Par définition d'un groupe, toute cellule qui est destinée à l'un des groupes de liaisons LG1, ..., LGk peut être émise sur n'importe laquelle des sorties OP1, ..., OPN reliées à l'une des liaisons de ce groupe.

Les étiquettes d'acheminement interne, pour chaque groupe de sorties, sont prédéterminées en fonction de la composition de ce groupe et en fonction des capacités d'acheminement du réseau SN :
- acheminement monotrajet vers une sortie unique;
- acheminement monotrajet vers une grappe de sorties ayant des adresses consécutives;
- ou acheminement multitrajet vers un sous-groupe régulier comportant plusieurs sorties.

La figure 1 représente à titre d'exemple un groupe irrégulier LG1 comprenant huit sorties et qui est décomposable en quatre sous-groupes réguliers :
- SG1 comportant quatre sorties dont les adresses sont consécutives;
- SG2 comportant deux sorties dont les adresses sont consécutives;
- SG3 comportant une seule sortie;
- et SG4 comportant une seule sortie.

Cette décomposition du groupe LG1 convient bien pour un réseau de commutation ayant la capacité d'acheminement vers un sous-groupe de sorties ayant des adresses liées par une relation mathématique, ou ayant seulement la capacité d'acheminement vers un sous-groupe de sorties ayant des adresses consécutives, mais ne convient pas si le réseau SN n'a que la capacité d'acheminement monotrajet, c'est-à-dire vers une seule sortie. Dans un tel cas, le groupe LG1 doit être décomposé en sous-groupes réguliers constitués chacun d'une seule sortie.

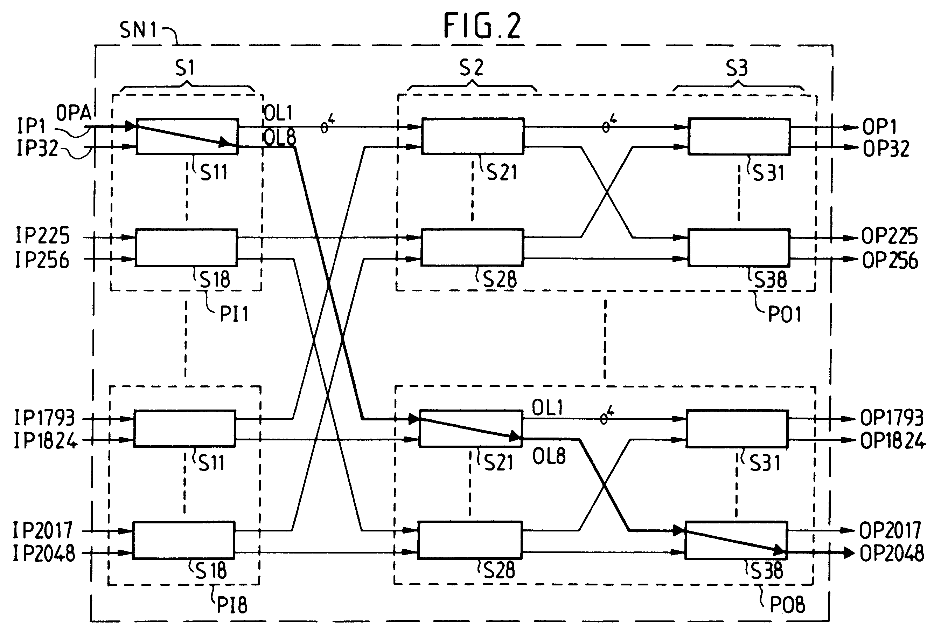

Les figures 2, 3, 4, 5, 6 illustrent quatre exemples de distribution d'une cellule vers une sortie d'un groupe irrégulier de sorties, selon les capacités du réseau de commutation SN. Le premier étage du noeud ND, constitué des dispositifs de traduction, n'est pas représenté. Il fournit, pour chaque cellule, des données d'acheminement interne différentes dans les quatre cas représentés.

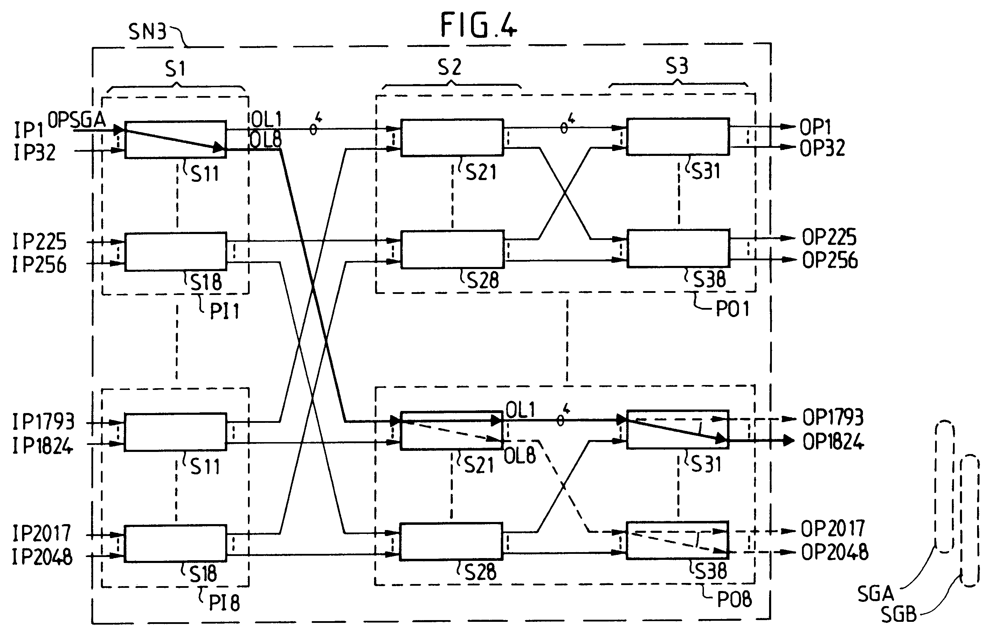

Sur ces figures, le réseau de connexion SN est référencé SN1, SN2, SN3, SN4, car il n'a pas les mêmes capacités. Dans les exemples représentés sur les figures 2, 3, 5, 6, il comporte trois étages S1, S2, S3 présentant une topologie régulière. Seul l'exemple représenté sur la figure 4 comporte un étage supplémentaire S4 permettant la distribution aléatoire de cellules sur une grappe de sorties.

L'étage S1 est constitué de 8 plans d'entrée PI1 à PI8 comportant chacun 8 commutateurs élémentaires S11, ..., S18. Les étages S2 et S3 sont situés sur huit plans de sorties PO1, ..., PO8 qui portent chacun 16 commutateurs élémentaires, à savoir 8 commutateurs élémentaires S21, ..., S28 pour l'étage S2, et 8 commutateurs élémentaires S31, ..., S38 pour l'étage S3. Chaque commutateur élémentaire possède 32 entrées et 32 sorties. Les 32 sorties de chaque commutateur élémentaire des étages S1 et S2 sont organisées en 8 groupes OL1, ..., OL8 de quatre sorties, chaque groupe étant connecté à un faisceau de quatre liaisons internes au réseau de connexion.

De même, les 32 entrées de chaque commutateur élémentaire des étages S2 et S3 sont organisées en huit groupes de quatre entrées.

Dans l'exemple représenté sur la figure 2, le noeud comporte un réseau de connection SN1 qui a seulement la possibilité d'acheminement monotrajet. Une cellule est acheminé selon un chemin qui est entièrement déterminé dès lors qu'une étiquette d'acheminement interne est associée à cette cellule. La sortie destinataire est donc déterminée elle-aussi, au même instant. Dans un tel cas, un groupe de sorties, régulier ou irrégulier, est décomposé à l'entrée du noeud en sous-groupes ne comportant qu'une seule sortie. Le dispositif de traduction sélectionne une étiquette parmi des étiquettes constituées respectivement par les adresses des sorties constituant ce groupe.

L'étiquette d'acheminement interne constitué d'une adresse de sortie, OPA, comporte alors plusieurs ensembles de bits, chaque ensemble identifiant une sortie d'un commutateur élémentaire par lequel doit transiter la cellule. Ainsi, pour ce réseau de connexion SN1 à trois étages, une adresse OPA d'une sortie du réseau de connexion SN, est constituée de trois ensembles de bits.

La figure 2 montre en traits forts la transmission d'une cellule de l'entrée IP1 du réseau SN à une sortie unique OP2048 du réseau SN1. Un premier ensemble de bits de l'étiquette comporte trois bits identifiant l'une des huit sorties OL1, ..., OL8 du commutateur S11 du plan PI1 du premier étage. Un deuxième ensemble comportant trois bits idendifie l'une des huit sorties OL1, ..., OL8 du commutateur élémentaire S21 du plan PO8. Un troisième ensemble comportant cinq bits identifie l'une des 32 sorties OP2017,..., OP2048 du commutateur élémentaire S38 du plan PO8. L'adresse de sortie OPA comporte donc 11 bits au total, qui permettent de définir un acheminement vers l'une des 2048 sorties du réseau de connexion SN1. Dans l'exemple représenté, l'adresse de sortie OPA est 111, 111, 11111, pour acheminer une cellule par : la sortie OL8 du commutateur élémentaire S11 de l'étage S1; puis la sortie OL8 du commutateur élémentaire S21 dans l'étage S2, du plan PO8; et enfin la 32ième sortie du commutateur S38 de l'étage S3 dans le plan PO8; cette sortie constituant la sortie OP2048 du réseau SN.

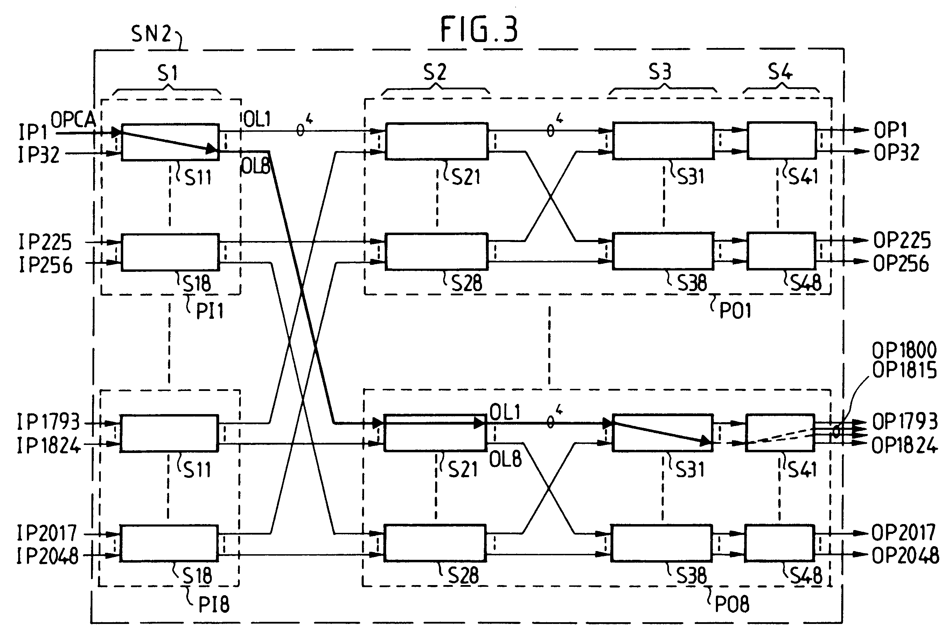

Dans l'exemple représenté sur la figure 3, le noeud comporte un réseau de connexion SN2 ayant la capacité d'acheminement monotrajet, augmentée de la capacité de distribution sur une grappe de sorties. Dans ce cas, un groupe de sorties est décomposé en sous-groupes réguliers qui sont tous des grappes, pour pouvoir profiter des capacités du réseau SN2. Une grappe peut éventuellement ne comporter qu'une seule sortie. Le circuit de traduction traduit l'identité de circuit virtuel ou de faisceau virtuel en une adresse de grappe de sorties, OPCA.

Par rapport à l'exemple précédent, cet exemple de réalisation SN2 comprend un étage supplémentaire S4 qui comprend, dans chaque plan de commutation PO1, ..., PO8, des éléments de commutation, S41, ..., S48, de type connu, pour faire une sélection aléatoire à l'intérieur de cette grappe. Dans cet exemple les caractéristiques des éléments de commutation S41, ..., S48 limitent à 32 le nombre de sorties par grappe. Les éléments de commutation S41, ..., S48 peuvent être constitués, par exemple, d'une file d'attente commune à 32 sorties et d'un serveur de sortie qui lit successivement les cellules en attente dans la file et les distribue aléatoirement sur 32 sorties.

Par exemple, l'étiquette OPCA permet aux commutateurs S11, S21, S31 d'acheminer une cellule selon un chemin unique jusqu'à une sortie unique de l'élément de commutation S31 du plan PO8. Puis l'élément de commutation S48 du plan PO8 réalise la sélection aléatoire d'une sortie parmi les seize sorties OP1800, .., OP1815, constituant la grappe désignée par OPCA.

Dans l'exemple représenté sur la figure 4, le noeud comporte un réseau SN3, ayant la possiblité d'acheminement multitrajet vers un groupe de sortie régulier, pas forcément constitué de sorties ayant des adresses consécutives. Un même groupe régulier peut comporter un nombre de sorties qui peut aller jusqu'au nombre total (2048) de sorties du noeud SN3. Chaque groupe irrégulier peut donc être décomposé en plusieurs sous-groupes réguliers, sans limitation du nombre de sorties dans chaque sous-groupe.

Dans l'exemple représenté, le circuit de traduction traduit un identificateur de circuit virtuel et de faisceau virtuel en une étiquette constituée d'une adresse de sous-groupe régulier, OPSGA, sélectionnée parmi deux étiquettes, car ce groupe irrégulier est décomposable en 2 sous-groupes réguliers, SGA et SGB. Ces sous-groupes ne sont pas des grappes car les sorties n'ont pas des adresses consécutives.

Par exemple, si le circuit de traduction a sélectionné le sous-groupe SGB pour la cellule considéré. L'étiquette OPSA désigne SGB et permet aux commutateurs élémentaires S21, et S31, ..., S38 du plan PO8 de sélectionner aléatoirement une sortie parmi toutes les sorties du sous-groupe SGB.

Par exemple, dans le sous-groupe régulier SGA, les adresses sont de la forme 1761 + K*32, et dans le sous-groupe régulier SGB les adresses sont de la forme 1792 + k*32, où k=1, ..., 8. Dans l'exemple représenté, la sélection aléatoire dans les commutateurs élémentaires S21 et S31, ..., S38 de PO8 transfére la cellule vers la sortie OP1824 du sous-groupe SGB. Les autres chemins menant aux sorties non sélectionnées du groupe sont représentées en pointillés forts.

Le noeud selon l'invention est compatible avec la diffusion d'une cellule vers plusieurs destinations constituées éventuellement de groupes irréguliers de sorties. Pour permettre une diffusion, chaque circuit de traduction sélectionne une étiquette d'auto-acheminement interne qui est constituée par l'identité d'un arbre de diffusion permettant d'acheminer, pour chaque destination, un exemplaire de cette cellule vers un sous-groupe régulier du groupe irrégulier constituant cette destination. Mais le cas où la destination est une sortie unique et le cas où la destination est un seul groupe de sorties régulier, sont des cas particuliers qui se déduisent facilement du cas général où les destinations sont constituées de plusieurs groupes irréguliers. Pour permettre une diffusion, au moins un élément de commutation du réseau de commutation doit être capable de diffuser une cellule selon l'arbre de diffusion identifié par l'étiquette d'auto-acheminement interne. Un tel élément de commutation identifie au moins une sortie parmi les sorties de cet élément, en fonction de l'arbre de diffusion identifié par l'étiquette d'acheminement interne associée à la cellule; et il émet un exemplaire de cette cellule sur chacune des sorties ainsi identifiées.

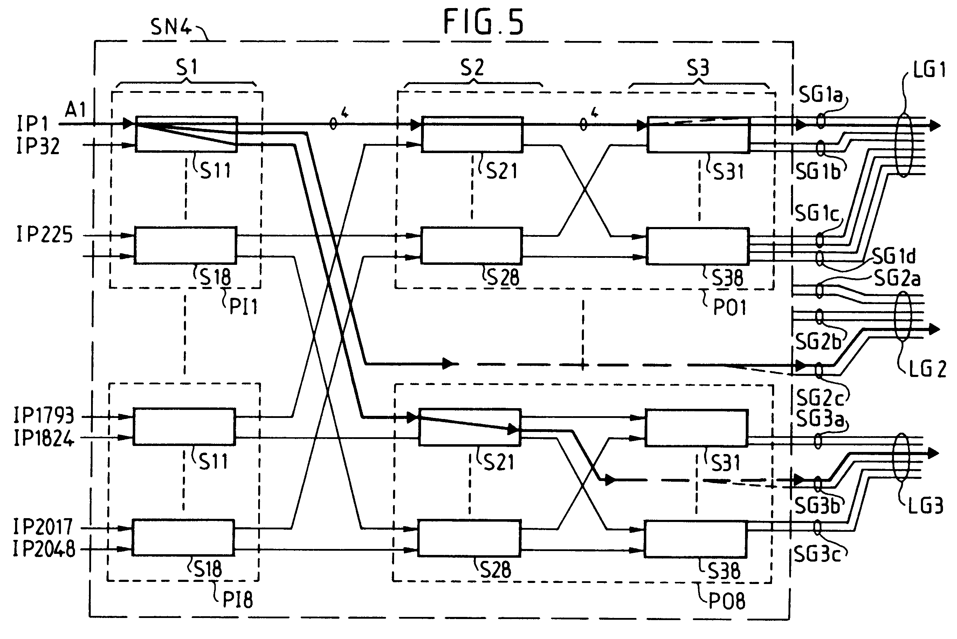

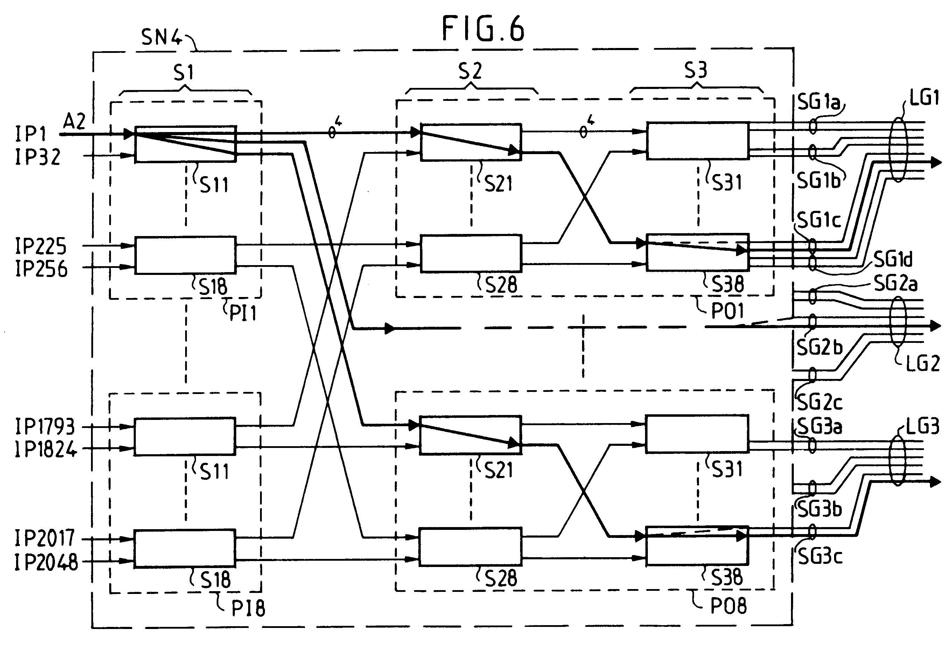

Les figures 5 et 6 représentent le même schéma synoptique que la figure 2, mais les éléments de commutation sont tous capables de réaliser un acheminement avec diffusion. Les figures 5 et 6 illustrent son fonctionnement dans le cas de la diffusion d'une cellule vers trois destinations qui sont trois groupes de sorties LG1, LG2, LG3. Sur chacune de ces figures un arbre de diffusion est représenté en traits forts.

Dans l'exemple représenté sur la figure 5, une cellule est appliquée à l'entrée IP1 avec une étiquette d'acheminement interne constituée par l'identité A1 d'un arbre de diffusion permettant d'acheminer : un premier exemplaire de cette cellule vers un sous-groupe régulier SG1a du groupe de sorties irrégulier LG1, un deuxième exemplaire de cette cellule vers le sous-groupe régulier SG2c du groupe irrégulier LG2, et un troisième exemplaire de cette cellule vers un sous-groupe régulier SG3b du groupe irrégulier LG3. La création des trois exemplaires de la cellule est réalisée dans l'élément de commutation S11 du plan PI1 du premier étage de commutation S1. Ces trois exemplaires sont émis sur trois sorties de cet élément de commutation S11 permettant d'accéder respectivement aux sous-groupes SG1a, SG2c, SG3b.

Le premier exemplaire transite par les éléments de commutation S21 et S31 du plan PO1. L'élément de commutation S31 réalise une distribution à l'intérieur du sous-groupe SG1a. Il choisit donc aléatoirement une sortie parmi les sorties du sous-groupe SG1a et réémet le premier exemplaire sur cette sortie. Les autres possibilités de sélection par l'élément de commutation S31 sont représentés en pointillés sur la figure. Une sortie est sélectionnée à l'intérieur du sous-groupe SG2c, et une sortie est sélectionnée à l'intérieur du sous-groupe SG3b, de manière analogue par des éléments de commutation qui ne sont pas représentés sur la figure.

La figure 6 illustre le fonctionnement du même noeud lorsqu'une cellule est appliquée à la même entrée I1 avec une étiquette d'acheminement interne constituée par l'identité A2 d'un autre arbre de diffusion permettant d'acheminer trois exemplaires de cette cellule respectivement vers un sous-groupe régulier SG1c du groupe irrégulier LG1, un sous-groupe régulier SG2b du groupe irrégulier LG2, et un sous-groupe régulier SG3c du groupe irrégulier LG3. Dans cet exemple, les trois exemplaires de la cellule sont créés encore dans l'élément de commutation S11 du plan PI1 mais ils suivent des chemins différents par rapport à l'exemple précédent. Le premier exemplaire est émis sur une sortie du sous-groupe régulier SG1c qui est choisi aléatoirement par le commutateur S38 du plan PO1. Le deuxième exemplaire est émis sur une sortie parmi les sorties du sous-groupe régulier SG2b par un élément de commutation qui n'est pas représenté. Le troisième exemplaire est émis sur une sortie choisie aléatoirement, par l'élément de commutation S38 du plan P08, parmi les sorties du sous-groupe régulier SG3c.

Le nombre d'arbres de diffusion A1, A2, ... qui sont prédéterminés pour diffuser une cellule de l'entrée IP1 vers les trois groupes LG1, LG2, LG3, est égal au nombre de combinaisons de trois sous-groupes, réalisables en prenant un sous-groupe de chacun des groupes LG1, LG2, LG3. Pour chaque entrée, et pour chaque combinaison de destinations, il y a un ensemble d'arbres de diffusion qui sont prédéterminés en fonction de l'architecture du réseau de commutation SN4 qui est utilisé.

Un réseau de commutation ayant la capacité d'auto-acheminement multitrajet avec acheminement de groupe et diffusion est décrit par exemple dans la demande de brevet européen n° 91-101915.5

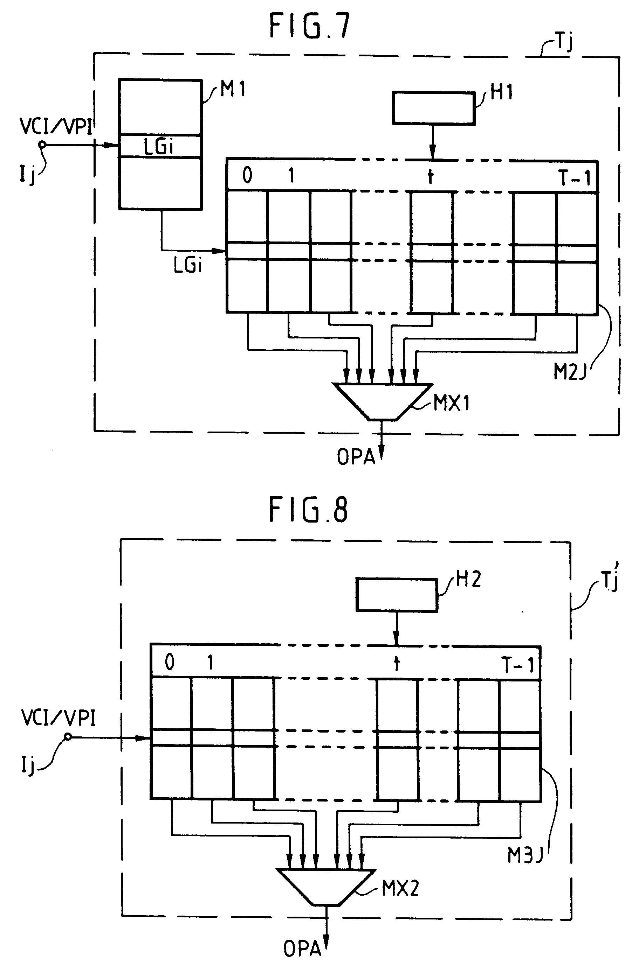

Les figures 7 et 8 représentent respectivement deux exemples de circuit de traduction, Tj et Tj', pour déterminer une étiquette d'acheminement interne. Ces deux exemples comportent des tables stockées dans des mémoires, mais il est possible aussi de déterminer une valeur au moyen d'un calcul réalisé pour chaque cellule reçue par le réseau de commutation. D'autre part, ces deux exemples concernent plus particulièrement le cas où :
- l'étiquette d'acheminement interne associée à une cellule est sélectionnée parmi des étiquettes qui identifient un sous-groupe régulier constitué d'une seule sortie, ces étiquettes sont donc constitués par l'adresse d'une sortie;
- la cellule a une seule destination;
- et toutes les sorties ont la même bande passante.

Le dispositif Tj représenté sur la figure 7 fonctionne en deux étapes :
- déterminer une identité LGi d'un groupe de sorties en fonction des identités VCI-VPI, en lisant la valeur LGi à l'adresse VCI-VPI dans une mémoire M1, qui est identique pour tous les circuits de traduction T1, ..., TN;
- lire l'adresse OPA d'une sortie appartenant au groupe LGi, dans une mémoire M2j, correspondant à l'entrée Ij du noeud.

La mémoire M2j est adressée à la fois par la valeur LGi et par une valeur t fournie par une horloge H1. L'horloge H1 fournit une suite de valeurs, à un rythme correspondant au rythme de réception des cellules sur chaque entrée I1...IN, et avec un modulo T qui égal, par exemple, à 128 fois la durée d'une cellule. La mémoire M2j comporte T colonnes correspondant aux valeurs t = 0 à T-1. Chaque colonne comporte autant de lignes qu'il y a de groupes de sorties : LG1, ..., LGk. Un multiplexeur MX1 recueille la valeur OPA fournie par l'ensemble des colonnes. Cette valeur OPA constitue l'étiquette d'acheminement interne OPA qui est fournie à l'entrée IPj du réseau SN, en même temps que la cellule considérée.

La figure 8 représente un second exemple Tj' de dispositif de traduction pour déterminer une étiquette d'acheminement interne, sans détermination explicite de l'adresse LGi du groupe de sorties destinataire de la cellule considérée. Il ne comporte plus de mémoires M1 de détermination de l'adresse LGi, mais il comporte une mémoire M3j adressée simultanément par la valeur des identités VCI-VPI et par la valeur t fournie par une horloge H2 analogue à l'horloge H1 décrite précédemment. La mémoire M3j comporte T colonnes correspondant aux valeurs t= 0 à T-1. Chaque colonne comporte autant de lignes qu'il y a de valeurs VCI-VPI utilisables pour les groupes LG1, ..., LGk. Un multiplexeur MX2 recueille la valeur OPA fournie par l'ensemble des colonnes de la mémoire M3j. Cette valeur OPA constitue la valeur de l'étiquette d'acheminement interne, OPA, qui est fournie à l'entrée IPj du réseau de connexion SN.

Considérons maintenant des exemples d'algorithmes utilisables pour choisir les adresses de sortie OPA de façon à réaliser une décorrélation temporelle et une décorrélation spatiale.

Le tableau ci-dessous représente le contenu des différentes mémoires M21, ..., M2N, ou M31, ..., M3N, en se limitant à une seule ligne correspondant à un groupe donné qui ne comporte que trois sorties : L1, L2, L3; le modulo T de l'horloge est égal à 128 fois la durée d'une cellule; et le nombre N d'entrées du réseau de connexion SN est égale à 16.

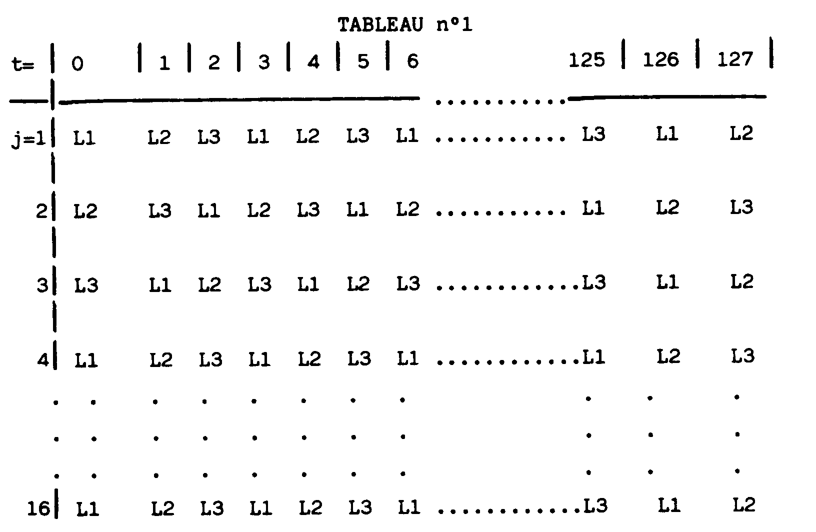

Dans cet exemple, le nombre de sorties, 3, étant inférieur au nombre d'entrées, 16, plusieurs entrées sont associées à une même sortie à un instant donné. Par exemple, à l'instant t=5, les cellules arrivant sur l'entrée de rang j=1, sur l'entrée de rang j=4, et sur l'entrée j=16 sont acheminées vers une même sortie L3. D'autre part, comme le nombre de sorties dans le groupe LGi n'est pas un sous-multiple de 128, les sorties n'apparaissent pas toutes avec le même nombre de fois dans ce tableau. Autrement dit, la répartition des cellules n'est pas absolument régulière entre les trois sorties. Cependant les différences restent minimes puisque chaque sortie n'apparaît qu'une fois de plus, au pire, que les autres sorties, pour l'ensemble de ce tableau.

Dans cet exemple d'algorithme de sélection, les identités des sorties L1, L2, L3 sont réparties, aussi régulièrement que possible, dans le tableau en incrémentant l'indice i de la sortie Li pour chaque incrémentation d'une unité de temps, en remplissant les lignes successivement. Comme le modulo T n'est pas un multiple du nombre, 3, des sorties constituant le groupe, il y a un décalage des identités de sortie pour chaque incrémentation d'une unité du rang j de l'entrée Ij ayant reçue la cellule considérée. Ce décalage en fonction de l'instant de réception d'une cellule et en fonction du rang ayant reçue cette cellule, suffit à assurer une décorrélation temporelle et une décorrélation spatiale des cellules.

Le tableau suivant représente le contenu d'une seule ligne des mémoires M21, ..., M2N ou M31, ..., M3N, en se limitant à un groupe donné, qui comporte 259 sorties : L1, ..., L259. Le modulo T de l'horloge est égale à 128 fois la durée d'une cellule.

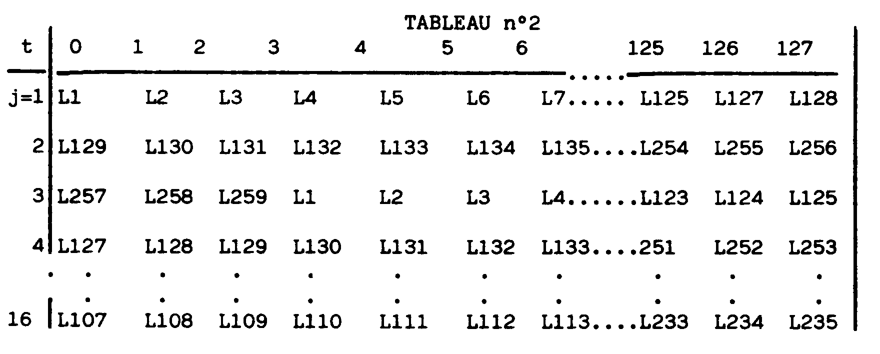

Dans cet exemple d'algorithme de sélection, les identités des sorties sont réparties régulièrement sur les lignes successivement pour j=1 à 16, en incrémentant l'indice i de la sortie Li d'une unité pour chaque unité de temps supplémentaire, modulo 259 qui est le nombre de sorties constituant le groupe. Comme le nombre de sorties n'est pas un multiple de T, les sorties correspondant à j = 1 à 16 pour t fixé sont différentes les unes des autres. Il y a donc bien décorrélation spatiale et décorrélation temporelle.

Le nombre de sorties que comporte le groupe est supérieur au nombre d'unités de temps comptées par l'horloge, par conséquent au cours des T périodes d'horloge certaines sorties appartenant au groupe ne sont jamais utilisées pour des cellules arrivant sur une entrée ayant une valeur de rang j donné. Par exemple, les sorties L129, L130, L259 ne sont jamais utilisées pour faire sortir des cellules reçues sur l'entrée de rang j = 1. Par contre, ces sorties sont utilisées pour faire sortir des cellules reçues par l'entrée de rang j = 2 et des cellules reçues par l'entrée de rang j = 3.

Un autre exemple d'algorithme pour sélectionner les identités des sorties du groupe L1, ..., L259, peut consister à les répartir régulièrement colonne par colonne pour t=0 à t=127, en incrémentant l'indice i de la sortie Li d'une unité lors de l'incrémentation d'une unité du rang j de l'entrée, modulo le nombre N = 16 des entrées. Le tableau suivant donne le contenu des lignes des mémoires M21, ..., M2N correspondant au groupe L1, ..., L259, lorsque cet exemple d'algorithme est utilisé.

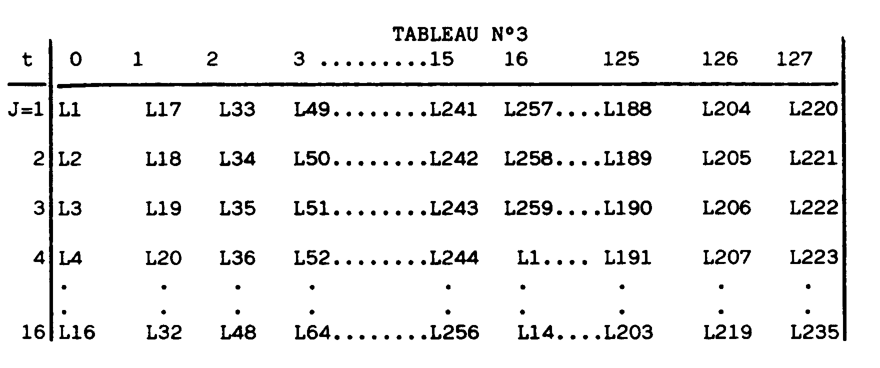

Les exemples d'algorithme de sélection de sortie décrits ci-dessus incrémentent l'adresse de sortie d'une unité pour chaque unité de temps écoulé et pour chaque unité du rang de l'entrée considérée. Selon une variante de mise en oeuvre, la variable temporelle t peut être remplacée par un nombre aléatoire quelconque changeant dynamiquement en assurant que les différentes valeurs de ce nombre aléatoire ont la même probabilité statistique.

Considérons le cas où l'étiquette d'acheminement interne est sélectionnée parmi des étiquettes prédéterminées dont certaines identifient un sous-groupe régulier comportant plusieurs sorties, ayant des adresses consécutives ou non. Les dispositifs de traduction représentés sur les figures 7 et 8 sont identiques, seule change la signification du contenu des mémoires M2j et M3j. L'adresse d'une sortie unique, OPA, est remplacée par une adresse commune à plusieurs sorties. Cette adresse est notée OPCA si ces sorties ont des adresses consécutives, et OPSGA si ce sont des adresses liées par une autre relation mathématique. Dans le cas où le réseau de commutation permet une diffusion, une identité d'arbre de diffusion peut être stockée à la place d'une adresse de sortie OPA.

Dans le cas où les sous-groupes de sorties n'ont pas une même bande passante, il est nécessaire de les sélectionner avec une pondération. Cette pondération peut consister à stocker en mémoire une liste d'adresses de sortie, ou d'adresses de sous-groupes, ou d'identités d'arbre, dans laquelle certaines d'entre elles sont dupliquées plusieurs fois pour multiplier leurs chances d'être sélectionnée. Celles qui ont la bande passante minimale ne figurent qu'une fois dans la liste. Celles qui ont une bande passante égale à deux fois la bande passante minimale figurent deux fois dans la liste, etc...

## Revendications

1. Noeud de commutation asynchrone distribuant dynamiquement des cellules vers des sorties constituant un groupe dit irrégulier, les adresses des sorties d'un groupe irrégulier n'étant pas liées par une relation mathématique; comportant :
- un étage d'entrée (T1, ..., TN) recevant des cellules sur une pluralité d'entrées (I1, ..., IN) et recevant pour chaque cellule une information d'acheminement externe (VPI-VCI), ce premier étage associant à chaque cellule une étiquette d'acheminement interne (OPA; OPCA; OPSGA) qui est fonction de l'information d'acheminement externe (VPI-VCI);
- et plusieurs étages de commutation (SN), chaque étage comportant au moins un élément de commutation; chaque élément de commutation comportant des moyens pour transférer une cellule reçue sur l'une de ses entrées vers au moins une de ses sorties, en fonction de l'étiquette d'acheminement interne (OPA; OPCA; OPSGA) associée à cette cellule;
caractérisé en ce que l'étage d'entrée (T1,..., TN) comporte des moyens (M2j, M3j) pour sélectionner, pour chaque cellule destinée à un groupe irrégulier de sorties, une étiquette d'acheminement (OPA; OPCA; OPSGA) parmi des étiquettes d'acheminement internes prédéterminées identifiant respectivement des sous-groupes de sorties dit réguliers, dont la réunion constitue ce groupe irrégulier, chaque sous-groupe régulier comportant une sortie unique ou une pluralité de sorties dont les adresses sont liées par une relation mathématique;
et en ce les moyens (M2j, M3j) pour sélectionner une étiquette la sélectionnent selon un algorithme qui est fonction du rang (j) de l'entrée (Ij) recevant ladite cellule.

2. Noeud selon la revendication 1, caractérisé en ce que l'agorithme est fonction en outre du temps.

3. Noeud selon la revendication 2, caractérisé en ce que l'algorithme est fonction d'une variable constituée de la somme de ladite valeur de rang (j) et d'un temps (t) incrémenté par unités de temps égales à la durée d'une cellule.

4. Noeud selon la revendication 1, caractérisé en ce que l'algorithme est fonction en outre de la bande passante de chaque groupe régulier constituant le groupe considéré.

5. Noeud selon l'une des revendications 1 à 4, comportant des étages de commutation ayant la possibilité d'acheminement monotrajet, caractérisé en ce que chacune des étiquettes d'acheminement prédéterminées (OPA) identifie une seule sortie.

6. Noeud selon l'une des revendications 1 à 4, comportant des étages de commutation ayant la capacité d'acheminement monotrajet, et comportant en outre, en aval, un étage supplémentaire (S4) ayant la capacité de distribuer de manière aléatoire des cellules dans un groupe de sorties régulier appelé grappe, chaque grappe étant constituée de sorties dont les adresses ont des valeurs consécutives;
caractérisé en ce qu'au moins une des étiquettes d'acheminement interne prédéterminées (OPCA) identifie une grappe de sorties.

7. Noeud selon l'une des revendications 1 à 4, comportant au moins un élément de commutation (S21,...) capable d'acheminement multitrajet, c'est-à-dire comportant :
- des moyens pour identifier un groupe de sorties, appellé groupe d'acheminement, parmi les sorties de cet élément, permettant d'accéder à l'une des sorties d'un sous-groupe régulier identifié par une étiquette d'acheminement interne (OPSGA);
- des moyens pour sélectionner une sortie parmi le groupe de sorties identifié;
caractérisé en ce qu'au moins une des étiquettes d'acheminement prédéterminées (OPSGA) identifie un sous-groupe régulier comportant plusieurs sorties.

8. Noeud selon l'une des revendications 1 à 4, pour diffuser plusieurs exemplaires d'une cellule respectivement vers plusieurs destinations pouvant être chacune un groupe irrégulier, comportant au moins un élément de commutation capable de diffuser une cellule selon un arbre de diffusion prédéterminé, cet élément comportant :
- des moyens pour identifier plusieurs groupes de sorties de cet élément, appelés groupe d'acheminement, en fonction d'un numéro d'arbre de diffusion situé dans l'étiquette d'acheminement interne de cette cellule;
- des moyens pour sélectionner au moins une sortie quelconque parmi les sorties de chaque groupe d'acheminement ainsi identifié;
- des moyens pour émettre un exemplaire de cette cellule sur chacune des sorties ainsi identifiées;
caractérisé en ce qu'au moins une des étiquettes d'acheminement prédéterminées identifie un arbre de diffusion permettant d'acheminer un exemplaire d'une cellule vers un sous-groupe régulier (SG1a; SG2c; SG3b) de chacun des groupes irréguliers (LG1, LG2, LG3) constituant les destinations de cette cellule.

## Claims

1. Asynchronous switching node distributing cells dynamically to outputs constituting an irregular group, the addresses of the outputs of an irregular group not being mathematically related, said node including:
- an input stage (T1, ..., TN) receiving cells on a plurality of inputs (I1, ..., IN) and receiving for each cell external routing information (VPI-VCI), said first stage adding to each cell an internal routing label (OPA; OPCA; OPSGA) conditioned by the external routing data (VPI-VCI); and
- a plurality of switching stages (SN) each including at least one switching element each including means for transferring a cell received at one of its inputs to at least one of its outputs according to the internal routing label (OPA; OPCA; OPSGA) associated with said cell;
characterized in that the input stage (T1, ..., TN) includes means (M2j, M3j) for selecting, for each cell addressed to an irregular group of outputs, a routing label (OPA; OPCA; OPSGA) from predetermined internal routing labels respectively identifying regular subgroups of outputs, the combination of which constitutes said irregular group, each regular subgroup including a single output or a plurality of outputs whose addresses are mathematically related; and in that the label selecting means (M2j, M3j) select the label using an algorithm which is dependent on the rank (j) of the input (Ij) receiving said cell.

2. Node according to claim 1, characterized in that the algorithm is also time-dependent.

3. Node according to claim 2, characterized in that the algorithm is dependent on a variable consisting of the sum of said rank (j) and a time (t) incremented by time units equal to the duration of a cell.

4. Node according to claim 1, characterized in that the algorithm is further dependent on the bandwidth of each regular group constituting the group in question.

5. Node according to any of claims 1 to 4 including switching stages having a single-path routing capability characterized in that each predetermined routing label (OPA) identifies only one output.

6. Node according to any of claims 1 to 4 including switching stages having a single-path routing capability and further including, on the downstream side thereof, an additional stage (S4) having the capability to distribute cells at random in a regular group of outputs called a cluster, each cluster being made up of outputs whose addresses have consecutive values, characterized in that at least one of the predetermined internal routing labels (OPCA) identifies a cluster of outputs.

7. Node according to any of claims 1 to 4 including at least one switching element (S21, ...) with a multipath routing capability, that is including:
- means for identifying a group of outputs called a routing group among the outputs of said element providing access to one output of a regular subgroup identified by an internal routing label (OPSGA); and
- means for selecting an output from the group of outputs so identified;
characterized in that at least one of the predetermined routing labels (OPSGA) identifies a regular subgroup including a plurality of outputs.

8. Node according to any of claims 1 to 4 for broadcasting a plurality of copies of a cell to a respective plurality of destinations each of which can be an irregular group, including at least one switching element with the capability to broadcast a cell according to a predetermined broadcast tree, said element including:
- means for identifying a plurality of groups of outputs of said element, called routing groups, according to a broadcast tree number included in the internal routing label of said cell;
- means for selecting at least one output at random from the outputs of each routing group so identified; and
- means for sending a copy of said cell to each of the outputs so identified;
characterized in that at least one of the predetermined routing labels identifies a broadcast tree enabling a copy of a cell to be routed to a regular subgroup (SG1a; SG2c; SG3b) of each of the irregular groups (LG1, LG2, LG3) constituting the destinations of said cell.

## Patentansprüche

1. Asynchrone Vermittlungsstelle zur dynamischen Verteilung von Zellen an Ausgänge, die eine sogenannte nicht-reguläre Gruppe bilden, wobei die Adressen der Ausgänge einer nicht-regulären Gruppe nicht durch eine mathematische Beziehung verknüpft sind, mit:
- einer Eingangsstufe (T1, ..., TN), die Zellen an einer Mehrzahl von Eingängen (I1, ..., IN) empfängt und für jede Zelle eine externe Leitweginformation (VPI-VCI) empfängt, wobei diese erste Stufe jeder Zelle ein internes Leitwegetikett (OPA; OPCA; OPSGA) zuordnet, das eine Funktion der externen Leitweginformation (VPI-VCI) ist;
- und mehreren Vermittlungsstufen (SN), wobei jede Stufe wenigstens ein Vermittlungselement umfasst und jedes Vermittlungselement Mittel zum Übertragen einer an einem seiner Eingänge empfangenen Zelle an wenigstens einen seiner Ausgänge in Funktion des dieser Zelle zugeordneten internen Leitwegetiketts (OPA; OPCA; OPSGA) umfasst;
dadurch gekennzeichnet, dass die Eingangsstufe (T1, ..., TN) Mittel (M2j, M3j) umfasst, um für jede Zelle, die für eine nicht-reguläre Gruppe von Ausgängen bestimmt ist, ein Leitwegetikett (OPA; OPCA; OPSGA) unter vorgegebenen internen Leitwegetiketten auszuwählen, die jeweils sogenannte reguläre Gruppen von Ausgängen identifizieren, deren Vereinigung die nicht-reguläre Gruppe bildet, wobei jede reguläre Untergruppe einen einzigen Ausgang oder eine Mehrzahl von Ausgängen, die durch eine mathematische Beziehung verknüpft sind, umfasst;
und dass die Mittel (M2j, M3j) zum Auswählen eines Etiketts dieses nach einem Algorithmus auswählen, der Funktion des Rangs (j) des Eingangs (Ij) ist, der die Zelle empfängt.

2. Vermittlungsstelle nach Anspruch 1, dadurch gekennzeichnet, dass der Algorithmus außerdem Funktion der Zeit ist.

3. Vermittlungsstelle nach Anspruch 2, dadurch gekennzeichnet, dass der Algorithmus Funktion einer Variable ist, die durch die Summe des Werts des Rangs (j) und einer Zeit (t) gebildet ist, die pro Zeiteinheit mit der Dauer einer Zelle inkrementiert wird.

4. Vermittlungsstelle nach Anspruch 1, dadurch gekennzeichnet, dass der Algorithmus außerdem Funktion des Durchgangsbandes jeder die betrachtete Gruppe bildenden regulären Gruppe ist.

5. Vermittlungsstelle nach einem der Ansprüche 1 bis 4, mit Vermittlungsstufen, die die Möglichkeit zur Einstrecken-Leitweglenkung haben, dadurch gekennzeichnet, dass jedes der vorgegebenen Leitwegetiketten (OPA) einen einzigen Ausgang identifiziert.

6. Vermittlungsstelle nach einem der Ansprüche 1 bis 4, die Vermittlungsstufen umfasst, die die Fähigkeit zur Einstrecken-Leitweglenkung haben, und die außerdem danach eine zusätzliche Stufe (S4) umfasst, die die Fähigkeit hat, Zellen in einer als Cluster bezeichneten regulären Gruppe von Augängen zufällig zu verteilen, wobei jeder Cluster aus Ausgängen gebildet ist, deren Adressen aufeinanderfolgende Werte haben, dadurch gekennzeichnet, dass wenigstens eines der vorgegebenen internen Leitwegetiketten (OPCA) einen Cluster von Ausgängen identifiziert.

7. Vermittlungsstelle nach einem der Ansprüche 1 bis 4, mit wenigstens einem Vermittlungselement (S21, ...), das zu Mehrstrecken-Leitweglenkung in der Lage ist, d. h. mit:
- Mitteln zum Identifizieren einer als Leitweggruppe bezeichneten Gruppe von Ausgängen unter den Ausgängen dieses Elements, die es ermöglichen, auf einen der Ausgänge einer regulären Untergruppe zuzugreifen, die durch ein internes Leitwegetikett (OPSGA) identifiziert ist;
- Mittel zum Auswählen eines Ausgangs aus der identifizierten Gruppe von Ausgängen;
dadurch gekennzeichnet, dass wenigstens eines der vorgegebenen Leitwegetiketten (OPSGA) eine reguläre Untergruppe mit mehreren Ausgängen identifiziert.

8. Vermittlungsstelle nach einem der Ansprüche 1 bis 4, zum Verbreiten mehrerer Exemplare einer Zelle jeweils an mehrere Ziele, die jeweils eine nicht-reguläre Gruppe sein können, mit wenigstens einem Vermittlungselement, das in der Lage ist, eine Zelle gemäß einem vorgegebenen Verbreitungsbaum zu verbreiten, wobei das Element umfasst:
- Mittel zum Identifizieren mehrerer Gruppen von Ausgängen dieses Elements, als Leitweggruppe bezeichnet, in Funktion einer Verbreitungsbaum-Nummer, die sich in dem internen Leitwegetikett dieser Zelle befindet;
- Mittel zum Auswählen wenigstens eines beliebigen Ausgangs unter den Ausgängen jeder so identifizierten Leitweggruppe;
- Mittel zum Senden eines Exemplars dieser Zelle an jedem der so identifizierten Ausgänge
dadurch gekennzeichnet, dass wenigstens eines der vorgegebenen Leitwegetiketten einen Verbreitungsbaum identifiziert, der es erlaubt, ein Exemplar einer Zelle zu einer regulären Untergruppe (SG1a; SG2c; SG3b) jeder der nicht-regulären Gruppen (LG1, LG2, LG3) zu leiten, die die Ziele dieser Zelle bilden.
